# EUROPEAN PATENT APPLICATION

(11) **EP 0 679 042 A2**
(43) Date of publication of application: **25.10.1995**
(21) Application number: 95302659.8
(22) Date of filing: 21.04.1995
(51) Int. Cl.: H04Q 7/24, H04L 12/56

(54) **Improvements in or relating to mobile communication ATM networks**

(30) Priority: 23.04.1994 GB 9408122
(71) Applicant: ROKE MANOR RESEARCH LIMITED, Romsey, Hampshire SO51 0ZN (GB)
(72) Inventor: McTiffin, Michael John, Winchester, Hampshire, SO22 5LH (GB)
(74) Representative: Allen, Derek

(57) **Abstract**

The asynchronous transfer mode (ATM) communication network comprising at least one mobile terminal arranged to be in radio communication with a plurality of base stations. The base stations are connected to an access network by way of sub-network and a sub-network interference unit. The access network is connected to a mobile network interface unit. Each sub-network interface and each mobile network interface unit includes splitting/combining means arranged to operate so that a mobile terminal can be affiliated to one or more base stations at any one time.

## Description

This invention relates to asynchronous transfer mode (ATM) communication networks and more particularly it relates to the use of macrodiversity in mobile communication systems.

Macrodiversity issued transmission between a mobile terminal and a base station must be combined at some point in the fixed network and information passing to the mobile terminal must require replicating. These functions may be performed at a central point within the fixed network but this leads to an inefficient use of the fixed network transmission capacity. A more efficient use of fixed network bandwidth may be achieved by locating the combining/splitting function close to the mobile terminal but in this case the function must move as the mobile terminal moves and becomes affiliated to different base stations.

Future mobile networks may well be supported by fixed networks employing ATM transmission techniques. The specifications accompanying our earlier patent application as hereinafter referred to, have discussed techniques whereby permanent virtual paths are set-up across the ATM network between base stations and a particular interface point to the fixed network mobile network interface unit. Within this area the virtual channel identifier (VCI) is given global significance and is used to designate the call. This technique has been enhanced to cover the case where a mobile terminal changes affiliation to a base station parented on separate mobile network interface unit. In neither case is network switching required to support changes in affiliation.

The present application, however, is concerned to extend the principles of the earlier patent applications to cover macrodiversity and changes in the point at which splitting and combining is performed to optimise the use of transmission capacity.

Considering firstly relevant material in mobile networks, it is important that the radio spectrum is used efficiently. Certain techniques by which this efficiency can be improved involve mobile terminal frequently changing the base station(s) to which they are affiliated (ie. through which they communicate). This imposes stringent requirements on switching times in the fixed network infrastructure if breaks in communication due to reaffiliation are to be kept short. A technique by which this may be achieved where a mobile requires a single path for communication with a fixed network has already been described in co-pending GB patent application number 9213373.5.

Further improvements may be gained where macrodiversity is used but this requires a number of simultaneous communication paths between a mobile terminal and the fixed network each using different base stations. Within the network this leads to the need to associate the various paths so that the information passing from the mobile terminal over such paths can be easily combined to reconstitute as far as possible the original data generated by the user terminal. In the direction of transmission to the mobile terminal, the fixed network must replicate information and route this over the correct paths towards the mobile terminal. This process has to be performed in an environment where a mobile terminal frequently changes its affiliation and where the network paths used are constantly changing.

Typically the network part of the mobile system will consist of base stations connected to a mobile network interface unit. The mobile network interface unit will be the point of interconnection between the mobile network and the fixed network for as long as a connection is being handled by one of the base stations in its area of responsibility. In a simple arrangement, uplink data is received at a number of base stations and is passed to this one point where they are combined. Similarly in the reverse direction the mobile network interface unit would be responsible for replicating information for transmission towards the mobile terminal. Because a number of network paths are required, this will increase the transmission capacity required of the access network between base stations and mobile network interface unit and it will be significantly greater than would be required by a single path per connection.

Benefits will accrue from distributing the splitting and combining function. However, the mobile terminal will constantly change the base stations to which it is affiliated which results in continuously changing access network paths. This will require that the positions of the splitter/combiner should be always changing which will potentially be a burden on the control system.

In the future, mobile terminals may be supported by a network using ATM. Such networks subdivide the data to be transmitted over the network into small packets of data called cells. These consist of 48 octets of user data and 5 octets of header. User data received over the air interface and for transmission over the air interface is transported over the fixed network in one or more ATM cells. The term 'data' is intended to cover all types of information passing between user and network including speech.

Known systems will now be considered and in this connection and attention is directed to co-pending GB patent application number 9213373.5.

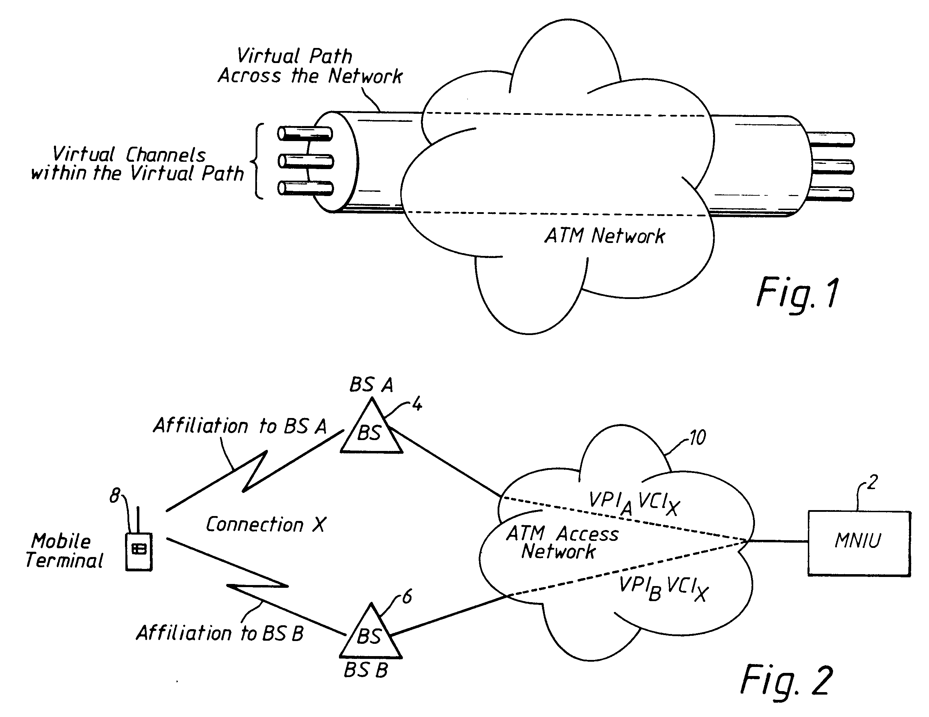

Consider all routing in an ATM network, the header of an ATM cell contains control information including virtual path identifier (VPI) and virtual channel identifier (VCI) fields. These two fields are used to route cells across the ATM network. The VPI is used to define a logical virtual path between two points in the network and in general there will be no direct physical connection between these two points. A virtual path will contain logical channels and the VCI value defines individual logical channels within the virtual path shown in Figure 1. The VCI only has significance within the virtual path and the same VCI value may be reused on other virtual paths. In general a switching node that routes on the basis of the VPI will not examine the VCI field.

The forgoing is the standard operation of an ATM network as envisaged by CCITT(now called ITU-T), and our co-pending patent application referred to above, relates to a novel use of the VCI field, and re-defines the VCI so that it identifies the connection and gives it global significance within that part of the access network controlled by a particular mobile network interface unit . Since switching nodes which route on the basis of VPI do not examine the VCI, this use of the VCI does not conflict with normal ATM network operation.

Referring to Figure 2, the connections between the mobile network interface unit 2 and base stations 4, 6 are defined by the VPI. The connection within the whole mobile network interface unit area is represented by the VCI which has global significance across all such VPI's. Each connection in progress will have a unique VCI allocated by the mobile network interface unit at connection set-up. The mobile network interface unit can then identify the cells relating to a particular connection by reference to the VCI alone.

The network is configured so that the mobile network interface unit 2 has a virtual path to each of the base stations 4, 6 to which it is connected. With reference to Figure 2, it has a virtual path designated VPI_{A} to the base station 4, and a virtual path designed VPI_{B} to the base station 6. These designations apply at the mobile network interface unit 2. Within the ATM network 10 the VPI may be translated resulting in different values being used at the base stations. Regardless of the values are used they relate to the same virtual path.

At the time of the connection to or from the mobile terminal 8 is set-up, the connection is allocated a unique VCI which is placed in the VCI field of all ATM cells carrying user data associated with that connection from the base station 4, 6 to the mobile network interface unit 2, and from the mobile network interface unit 2 to the base station 4, 6. The same VCI will generally be used in both directions of transmission but this is not essential. In Figure 2 Connection X is allocated VCI_{X}.

When the mobile terminal is affiliated to a particular base station the user data is transmitted across the network using the VPI associated with the connection from that base station to the mobile network interface unit 2 and the VCI allocated at connection set-up for the connection. In Figure 2, when the mobile terminal is affiliated to a base station 4, VPI_{A} and VCI_{X} are used, and when the mobile terminal is affiliated to base station 6, VPI_{B} and VCI_{X} are used.

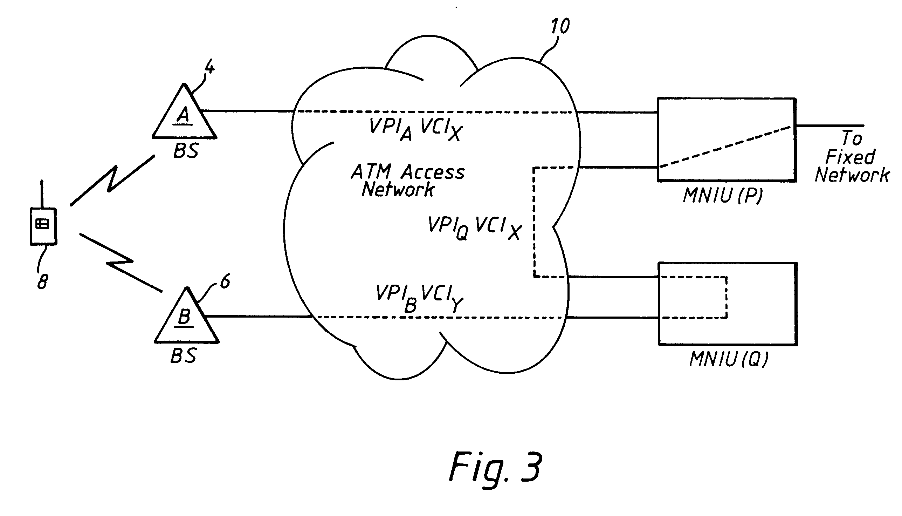

As described in co-pending GB patent application number 9214572.1, the principles explained above may be extended to the case where a mobile terminal is affiliated to base stations parented on more than one mobile network interface unit or moves to a base station parented on a different mobile network interface unit. With reference to Figure 3, it can be seen that when the mobile terminal changes affiliation from the base station 4 to the base station 6, suitable translation of the VCI by mobile network interface unit Q will ensure that at the point at which the links from the base stations are combined within mobile network interface unit P, the VCI value assigned will be VCI_{X} even though the VCI value used within the control domain of mobile network interface unit Q may be different.

Figure 2 has been introduced as showing the case where a mobile terminal 8 is only affiliated to and only communicates via the base station 4 or the base station 6. However, the same arrangement will apply if the mobile terminal 8 communicates simultaneously through the base station 4 and the base station 6.

Figure 4 shows an arrangement by which streams from different base stations may be routed to a combiner unit and how data from the splitter can be routed to the correct base stations.

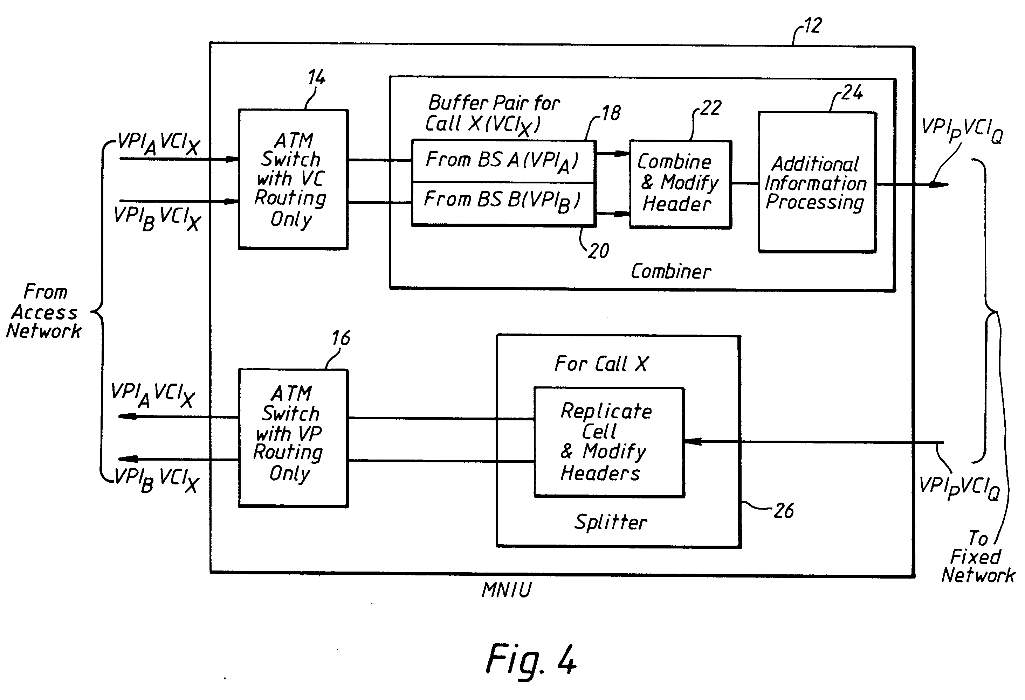

The mobile network interface unit 12 shown in Figure 4 comprises an ATM switch 14 arranged to handle virtual channel routing only from the access network, and a pair of buffers 18, 20 for storing data transmitted from the mobile via base station BSA, and the base station BSB respectively. The output from each buffer is connected to a circuit 22 which is arranged to combine the data in the buffers and modify the header information. The output of the circuit 22 is connected to an input of information processing circuitry 24, the output of which is fed to a fixed network. A splitter circuit 26 receives information from the fixed network and is used to replicate the cell information and modify the header information. The splitter circuit 26 has two output lines connected to an input of an ATM switch 16 respectively, which is provided with virtual path routing information only and is arranged to feed information out to the access network.

Each connection in progress will have a unique VCI allocated by the mobile network interface unit 12 at connection set-up and for each connection the mobile network interface unit will also allocate a buffer 12, 20. It is assumed that the mobile terminal is using macrodiversity. Data arriving at the base station is placed in ATM cells with the required VPI and VCI in the header and will be routed over the ATM network using the VPI. On arrival at the mobile network interface unit they will be routed to the buffer indicated by the VCI where they are combined. Since the mobile network interface unit 12 knows the connection identity it can append the VPI and VCI required by the fixed network before launching the cell into the ATM fixed network.

In the reverse direction the mobile network interface unit will replicate the incoming ATM cells, translate the ATM header as appropriate and transmit them to the base station(s) to which the mobile terminal is currently affiliated using the VCI defining the connection and the relevant VPI(s).

The foregoing assumes that all the base stations are logically connected directly to the mobile network interface unit. The required access network transmission capacity can be reduced if the splitter/combiner function is distributed.

To enable macrodiversely routed data to be combined at a point nearer the base station than the mobile network interface unit, the mobile infrastructure network may be divided into sub-networks. The sub-networks will interface to the rest of the network by means of a limited number of sub-network interfaces (SNI's) which will contain splitter/combiner units. Such sub-networks will often occur naturally in a network and could consists of a MAN, cell cluster, or the area served by a concentrator, for example, as part of a hierarchical routing strategy. Thus a sub-network will be logically separate although physically it may be an integral of the total network.

According to the present invention there is provided an asynchronous transfer mode (ATM) communication network comprising at least one mobile terminal arranged to be in radio communication with a plurality of base stations, said base stations being connected to an access network by way of sub-network and a sub-network interference unit, said access network being connected to a mobile network interface unit, characterised in that each sub-network interface unit and each mobile network interface unit includes splitting/combining means arranged to operate so that a mobile terminal can be affiliated to one or more base stations at any one time.

According to an aspect of the invention there is provided an ATM communication network, wherein a particular route across the network is identified by a virtual path identifier which identifies a particular base station or a particular sub-network interface unit, or a particular mobile network interface unit.

An embodiment of the present invention will now be described with reference to the accompanying drawings, wherein:

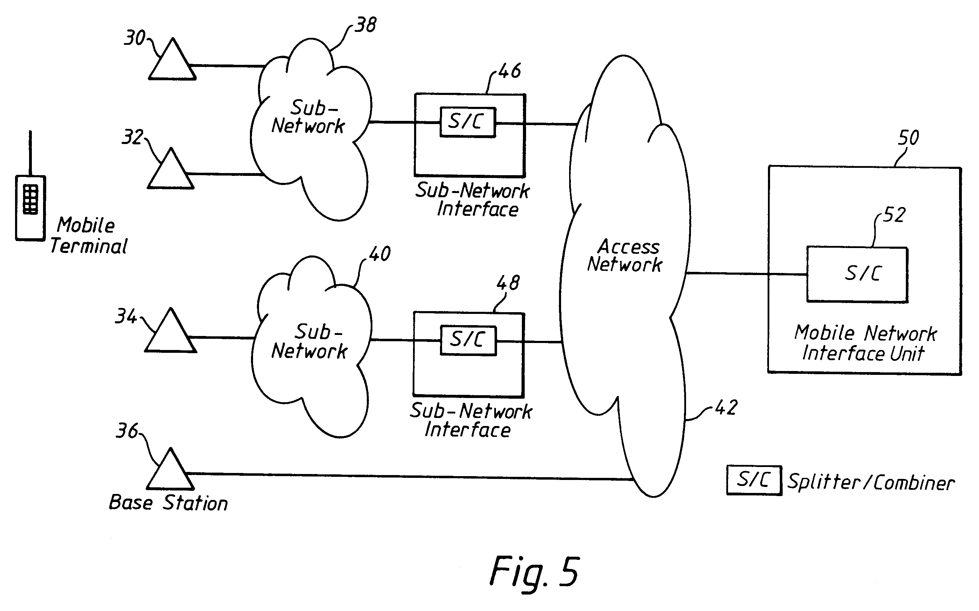

FIGURE 5 shows a modified network structure with distributed splitter/combiner functions,

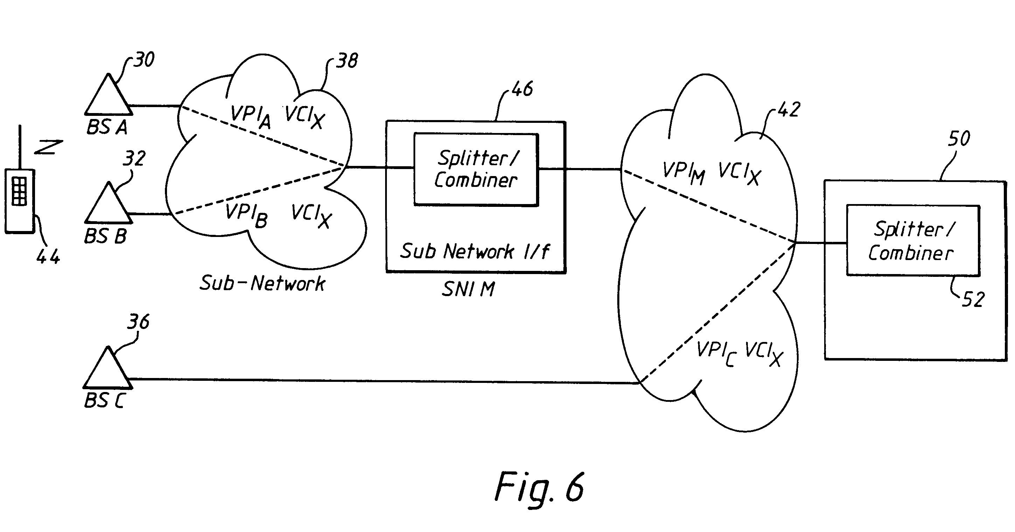

FIGURE 6 illustrates the use of VPI/VCI's with distributed splitter/combiner functions,

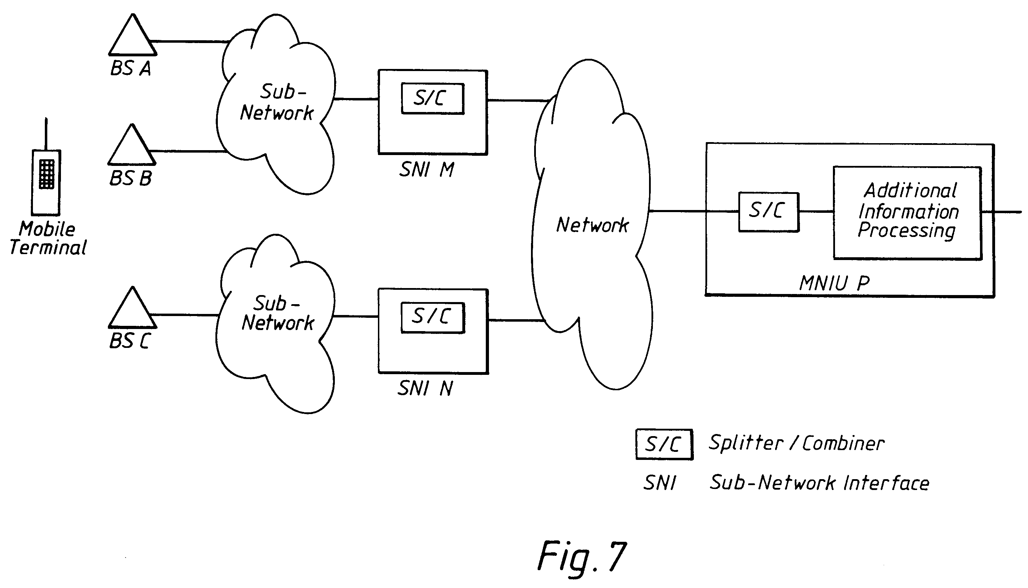

FIGURE 7 shows a plurality of base stations being connected to a mobile network interface unit by a pair of sub-networks,

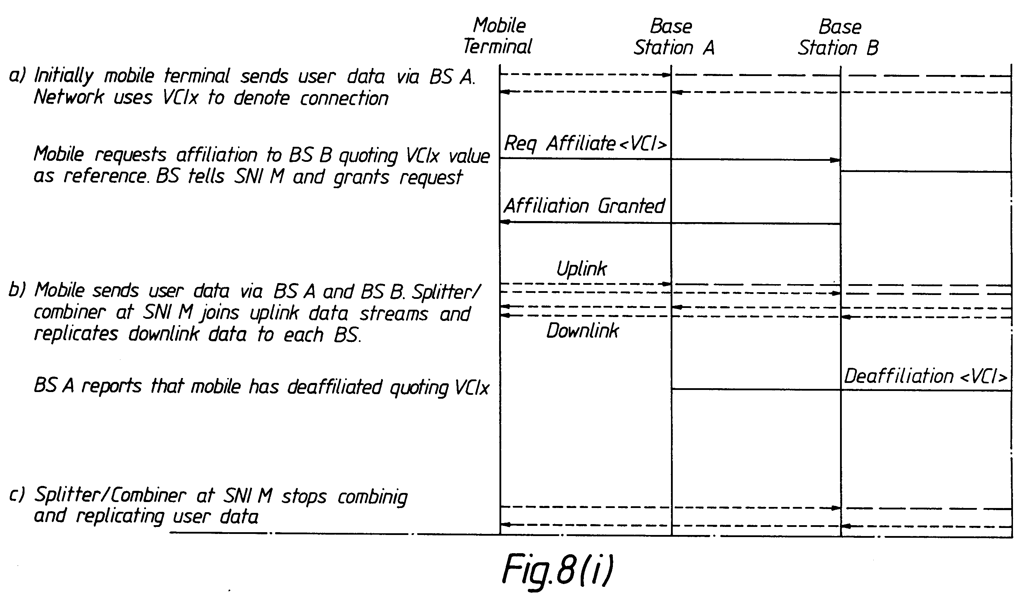

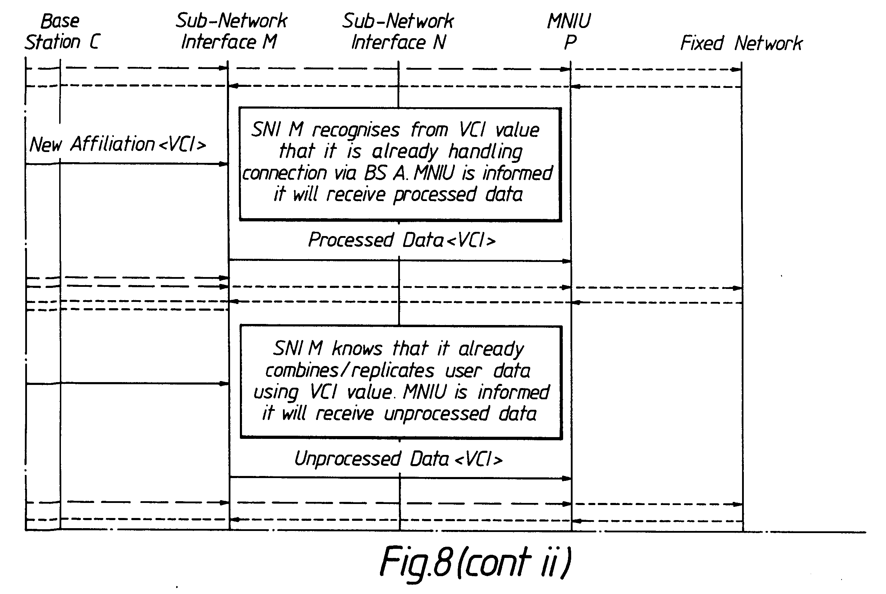

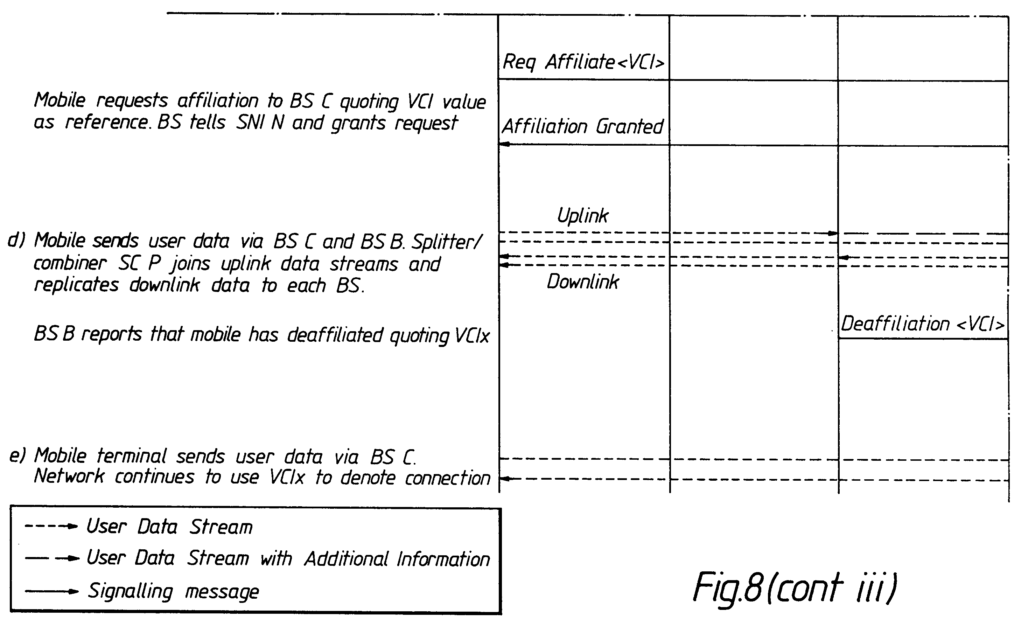

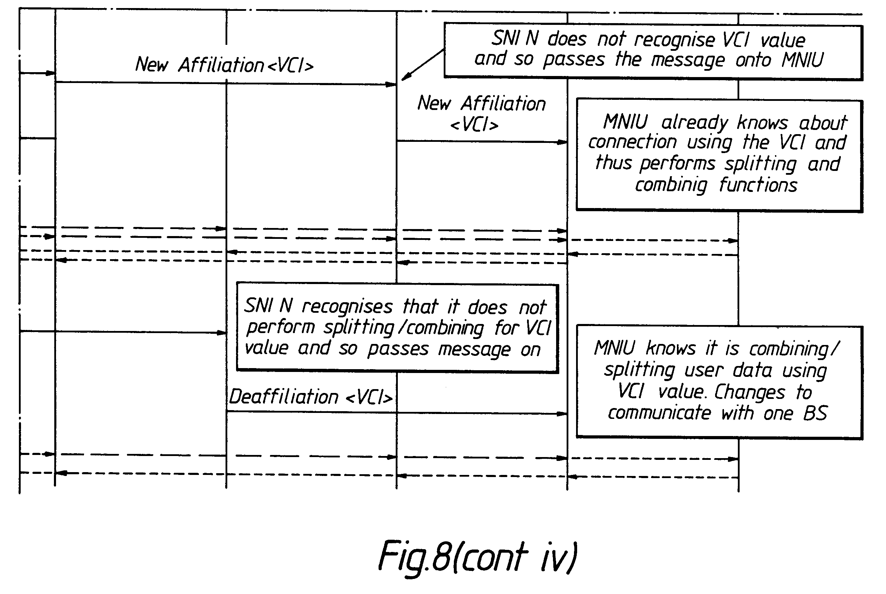

FIGURE 8 shows the handover protocols and use of the splitter/combiners,

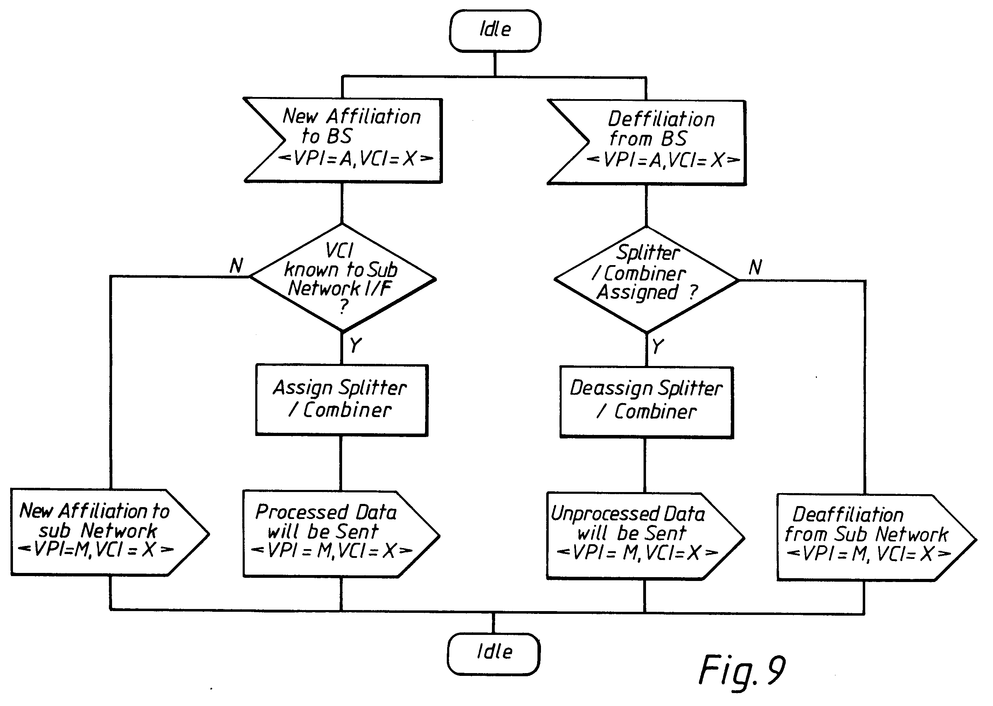

FIGURE 9 shows a sub-network interface algorithm for use in allocating the splitter/combiners,

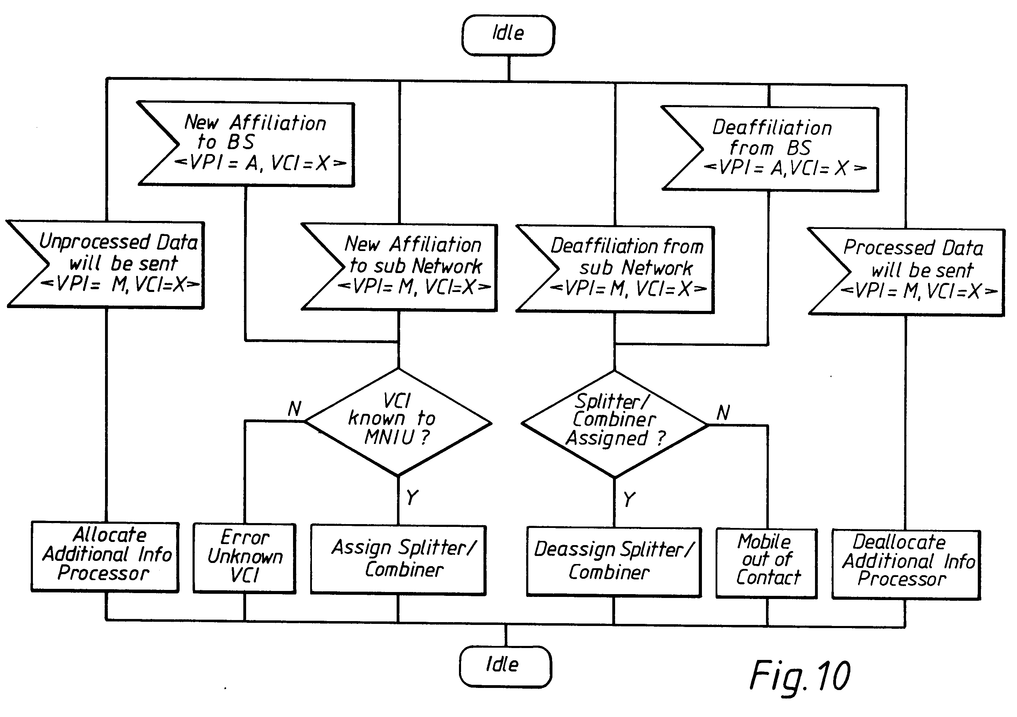

FIGURE 10 shows a mobile network interface unit algorithm for use in allocating the splitter/combiners together with additional information processing,

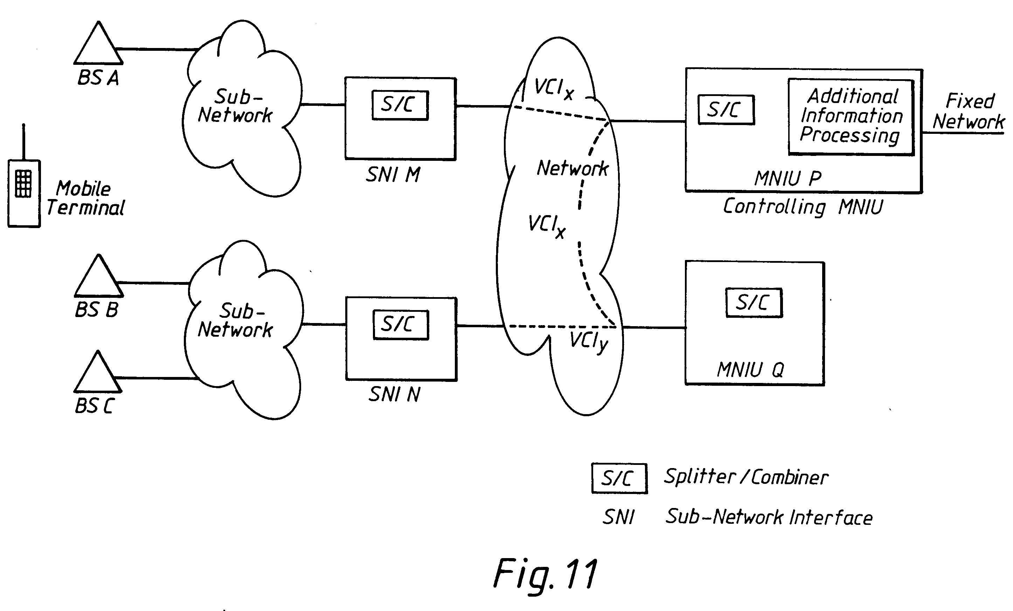

FIGURE 11 shows a number of base stations being connected to a number of different mobile network interface units,

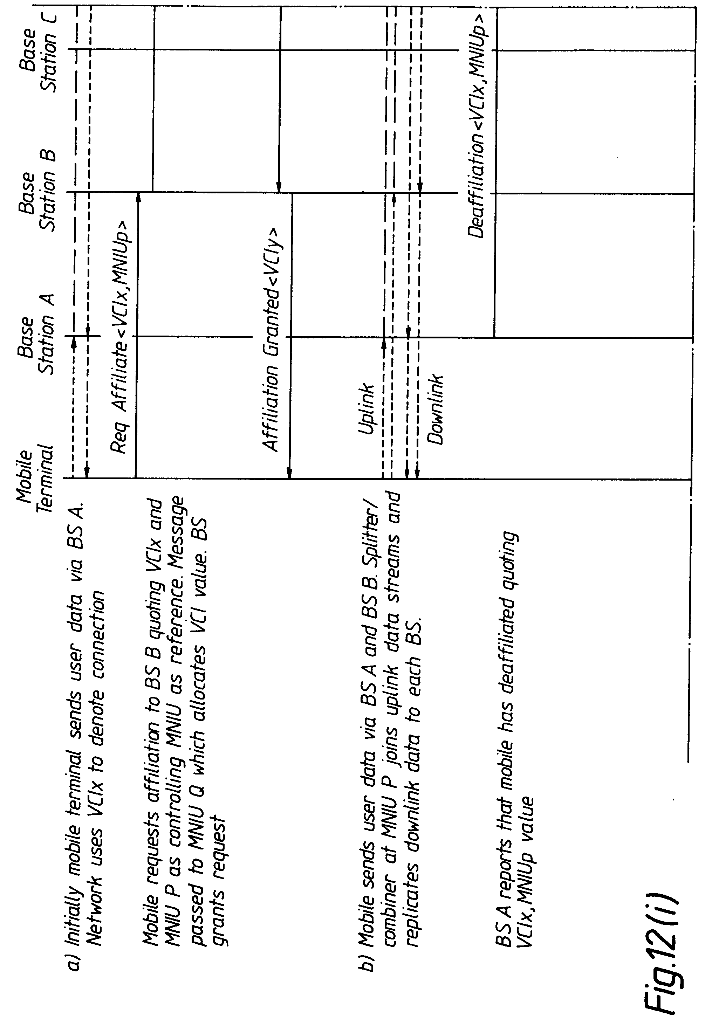

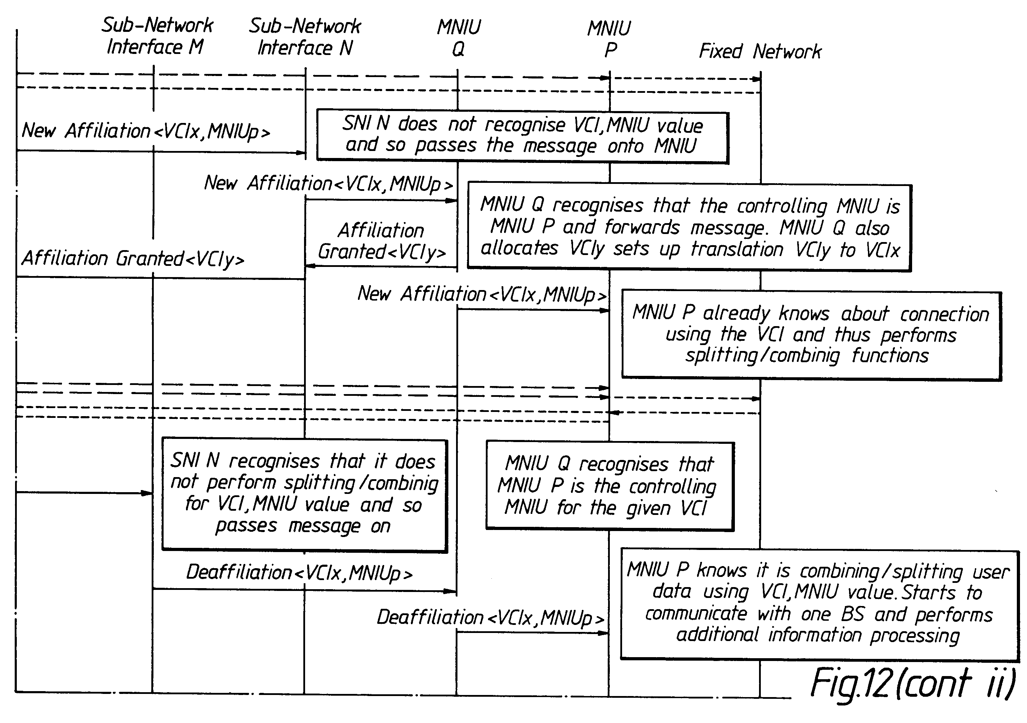

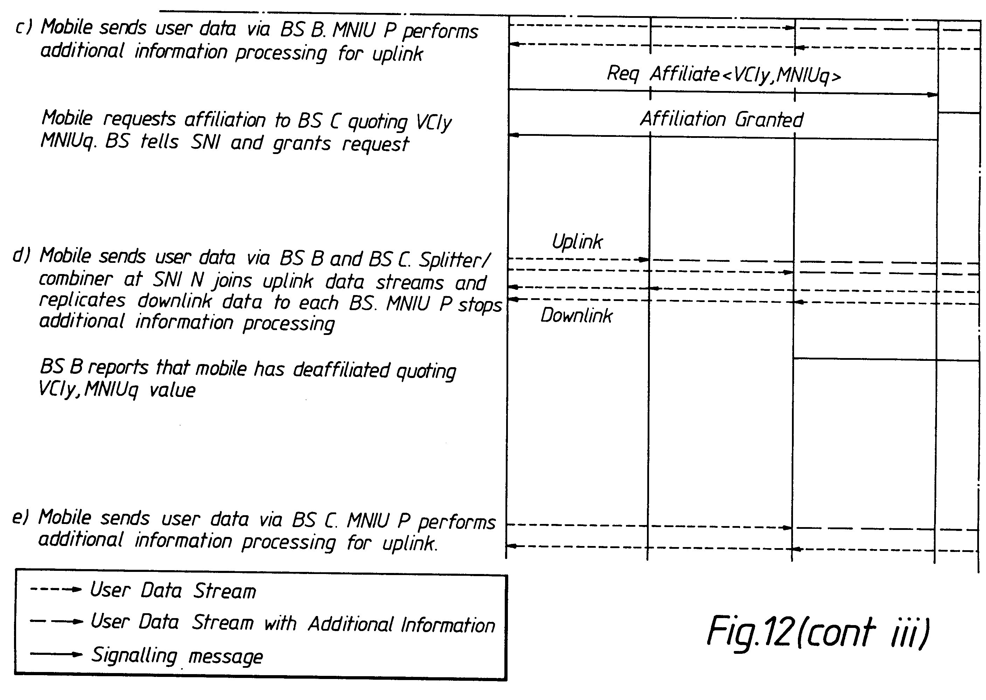

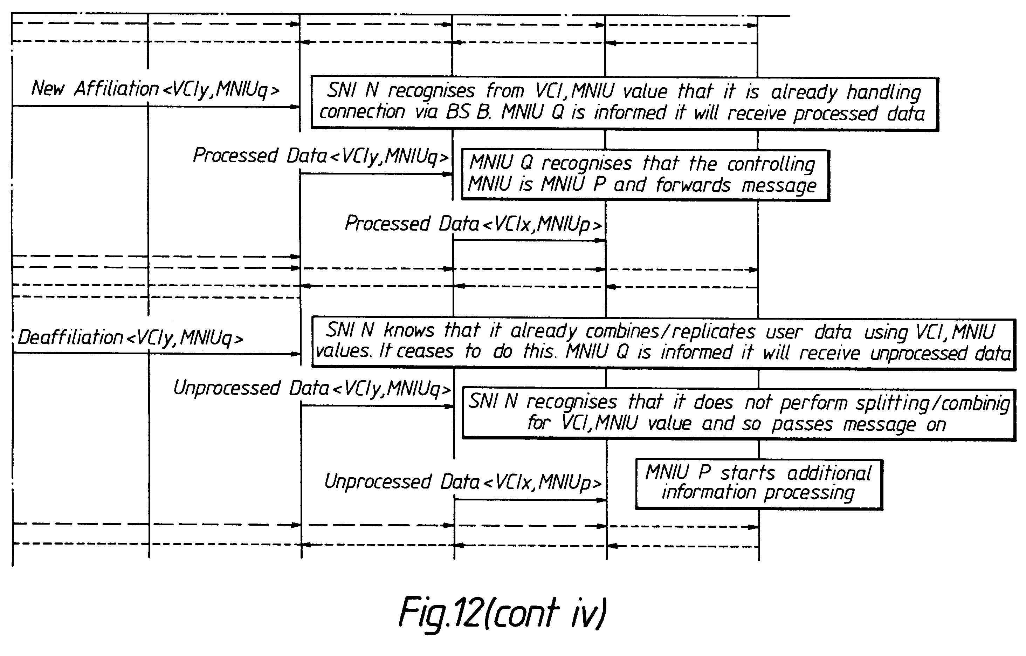

FIGURE 12 shows the handover protocols and use of splitters/combiners on handover between base stations on different mobile network interface units, and

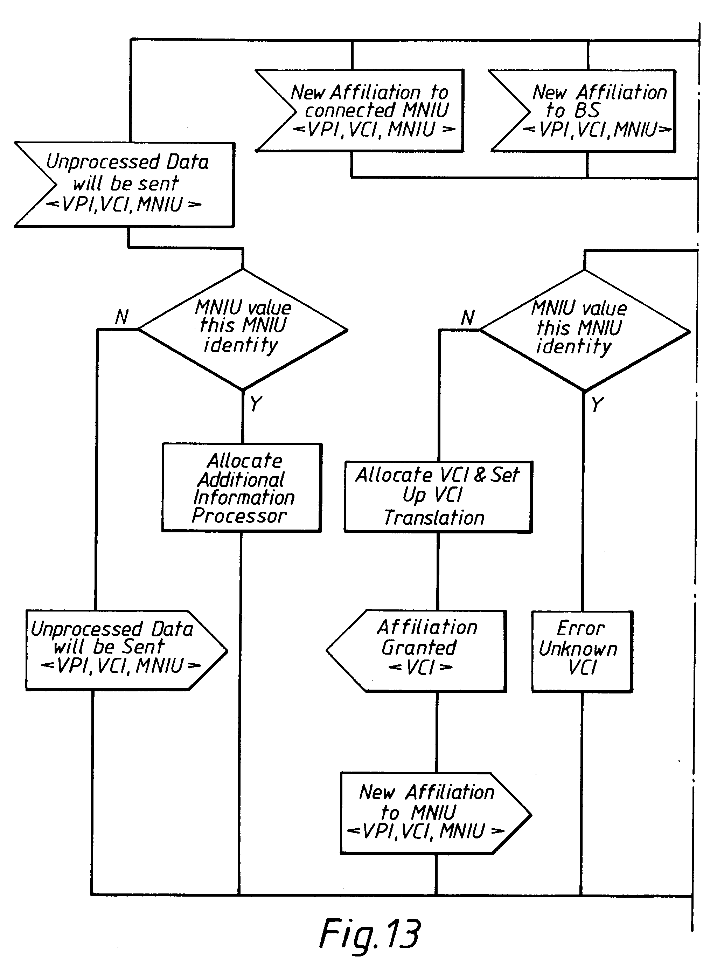

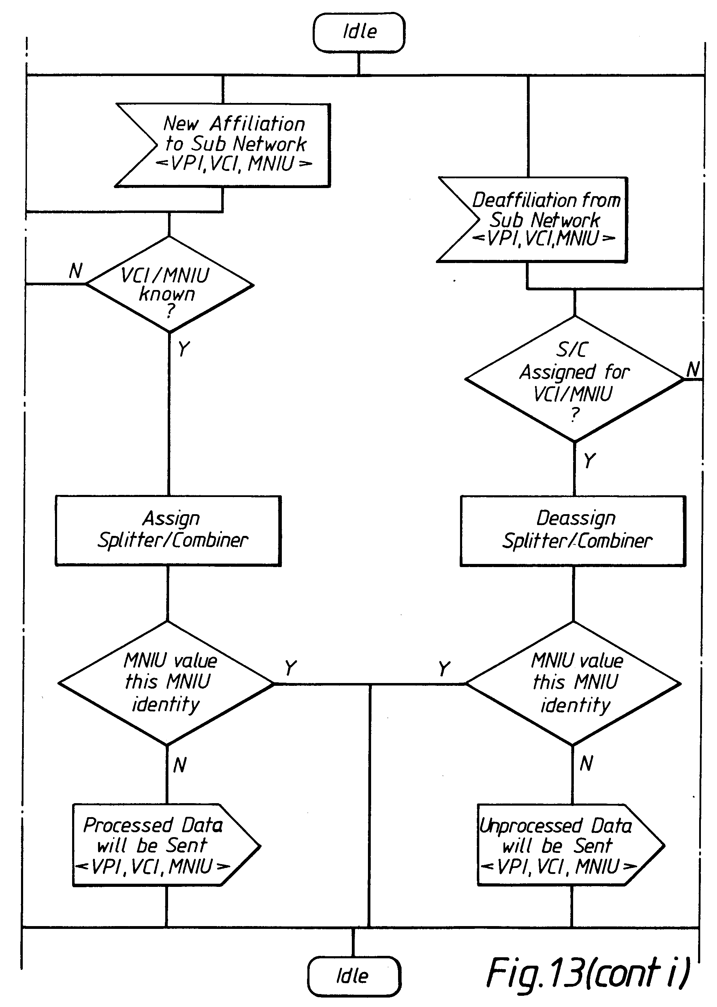

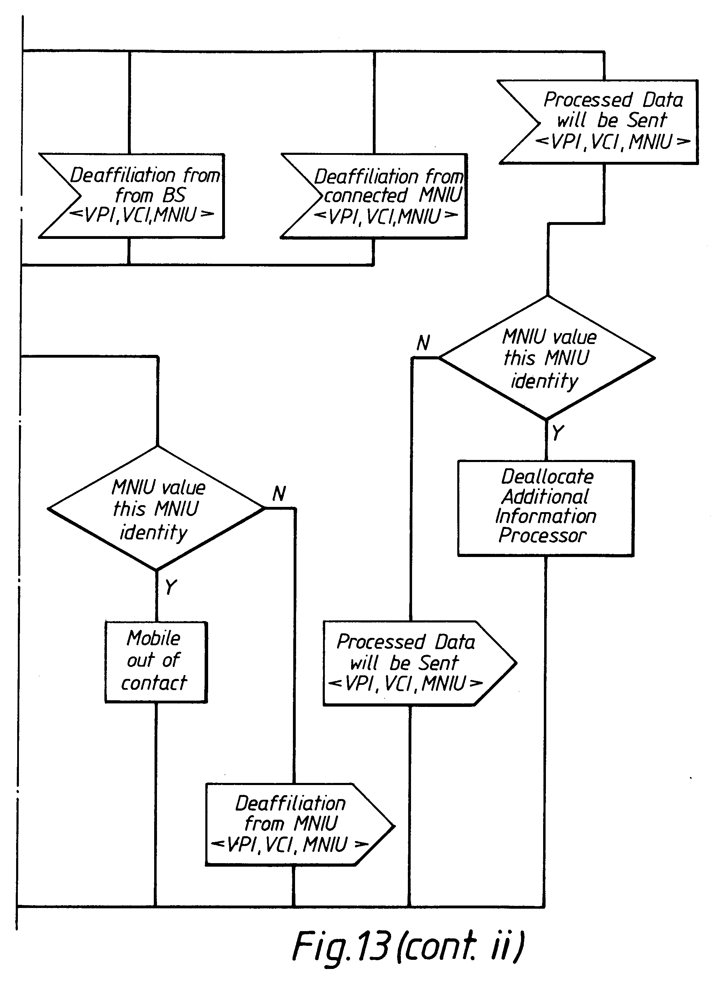

FIGURE 13 shows a modified mobile network interface unit algorithm handling inter mobile network interface unit handover.

Referring to Figure 5, the modified network structure under consideration is shown, and only the distribution of the splitter/combiner function is considered here.

In Figure 5, the base stations 30, 32 are connected to a sub-network 38, a base station 34 is connected to a sub-network 40, and a base station 36 is connected to an access network 42. A mobile terminal 44 communicates with the base stations. A sub-network 38 is connected to a splitter/combiner network 46, the output of which is connected to the access network 42. Similarly, the sub-network 40 has an output connected to a splitter/combiner circuit 48, the output of which is connected to the access network 42. The access network 42 is connected to the mobile network interface unit 50 which also carries out a splitting/combining function as designated by circuit 52.

In comparison with the basic scheme referred to above, the significance of the VCI is unchanged but that of the VPI is modified so that it may indicate not only the base station but also the sub-network interface unit involved. The VPI thus shows the node (be it base station or sub-network interface unit) from which uplink cells originate and to which downlink cells should be directed.

In Figure 6, elements which are the same as those shown in Figure 5 bear the same reference numeral.

With reference to Figure 6, the base station receives information over the radio interface and encapsulates it in ATM cells It appends a VCI corresponding to the connection (VCI_{X}) and a VPI showing the base station. Depending upon the network topology the cell is either routed through a sub-network 38 to a sub-network interface 46, or goes directly to the mobile network interface unit 50. If the path is through a sub-network the sub-network interface unit 46 changes the VPI so that it gives the sub-network interface identity before forwarding the ATM cell to the mobile network interface unit 50.

Depending upon whether there are any macrodiverse paths and where they first pass through a common unit, splitting and combining can be performed at either the sub-network interface unit or mobile network interface unit 50. Using the VPI values shown in Figure 6, if splitting/combining is performed at the sub-network interface unit 40, the two paths can be identified by the VPI values A and B; if the function is performed at the mobile network interface unit they are identified by values M and C.

On the downlink, if the mobile network interface unit 50 is performing the splitting function it sends the replicated information with the VPI values VPI_{M} and VPI_{C}. The sub-network interface unit M will pass the data transparently merely changing VPI_{M} to VPI_{A} or VPI_{B} as appropriate. If the sub-network interface unit performs splitting the mobile network interface unit 50 will send on VPI_{M} only and the sub-network interface M unit will send on both VPI_{A} and VPI_{B}.

Each affiliation and deaffiliation request from the mobile terminal (or base station) contains the identity (VCI) of the connection and the base station reporting the change (VPI). On receiving an affiliation request message the sub-network interface unit decides whether it is aware of a connection using the quoted VCI and if so assigns a splitter/combiner to the connection. Otherwise it passes the message on having first changed the VPI value to show the mobile network interface unit that it is the next point on the connection to the mobile terminal. On receipt of the message the mobile network interface unit similarly decides if it already knows about a connection with that VCI. If it does it allocates a splitter/combiner; it if does not, it is a new connection within the mobile network interface unit area.

On deaffiliation a similar but reverse process applies.

The above assumes that the combiner function is straightforward and performed upon digital data streams. If this were so, the output could be passed directly to the fixed network without further manipulation. In fact the output from the base stations may well contain additional information to allow the combiners to make a more informed decision about which of a number of information streams to select at a given instant. Such additional information will usually be removed as part of any combining process but will be sent by the base station even when parallel paths do not exist, and so when no combining occurs it will have to be removed from the data stream before it is forwarded to the fixed network.

The method for assigning individual splitter/combiners may be illustrated by means of an example. Figure 7 shows base stations A, B and C connected to the mobile network interface unit via a pair of sub-networks which connect to the main network via the sub-network interface units M and N. Each sub-network interface unit has its own splitter/combiner as does the mobile network interface unit.

The mobile terminal is assumed to start off by being affiliated to base station A and progressively moves to being affiliated to base stations B and then C. In so doing it passes through conditions where it is simultaneously affiliated to base stations A and B and later base stations B and C. Here it is assumed that a mobile terminal uses macrodiversity and communicates via all the base stations to which it is affiliated.

Figure 8 (with reference to Figure 7) shows the interaction between changes in mobile affiliation, the invocation of the splitter/combiner function, and additional information processing at the sub-network interface units and the mobile network interface unit. In the connection state (a) in Figure 8, the mobile terminal is affiliated to base station A only. On the uplink the base station forwards the user data with the associated additional information. Since there is only a single path no splitter/combiner is required at the sub-network interface unit 46 and additional information processing is performed at the mobile network interface unit P.

The mobile terminal now requests affiliation to the base station B quoting the VCI for the connection and a splitter/combiner is allocated at sub-network interface unit M. The mobile network interface unit 50 is informed that it will in future receive processed data. The mobile terminal now has dual diversity, state (b) Figure 8, and the two paths are combined at the sub-network interface unit M where any additional information is removed as part of the combining process.

The mobile terminal deaffiliates from the base station A, and the connection reverts to the state it was originally but with the base station being B, rather than A, state (c) Figure 8. Additional information processing goes back to being performed at the mobile network interface unit P.

The mobile terminal now requests affiliation to base station C, which is on a different sub-network. Since the sub-network interface unit N knows nothing of the VCI given in the affiliation message, it passes the message onto the mobile network interface unit. The diverse paths are combined at the mobile network interface unit and any additional information is removed as part of the combining process, state (d) Figure 8.

Finally, the mobile terminal deaffiliates from base station B. The connection again reverts to its original state but with the base station being C rather than A, and the sub-network interface unit being N rather than M, state (e) Figure 8.

Figure 9 shows the principle of the algorithm performed at the sub-network interface unit to decide whether a splitter/combiner should be allocated to the connection. It also shows the nature of the messages sent to the mobile network interface unit. If the sub-network interface unit is to perform combining, it informs the mobile network interface unit to expect processed data. If the VCI is not known in the sub-network interface unit it changes the VPI and passes the message onto the mobile network interface unit.

The operation of the mobile network interface unit is similar (Figure 10), but since it is assumed to be the highest point in the access network, messages cannot be forwarded. Also, messages may be received directly from base stations which are not part of a sub-network as well as from the sub-networks. In addition, the mobile network interface unit has to decide whether additional information processing of the uplink data stream is required.

Although the above has been discussed in the context of one network scenario, there is flexibility in how the principles outlined can be used.

It has been assumed that there is only one sub-network interface unit per sub-network. It will be appreciated that there could be a number.

If there is no free splitter/combiner at a sub-network interface unit when one is required, it would be possible to route both paths to the mobile network interface unit and use a splitter/combiner there. This would optimise the use of splitter/combiners but would require extra network transmission capacity.

Although only two levels of splitter/combiner have been discussed the number of levels could be increased should it give a more cost effective network solution. This can be used to provide handover between base stations on different mobile network interface units.

The above has assumed dual diversity but the principle could be extended to cover increased levels of diversity.

The above method of operation will not only reduce the length of any second network path required to support macrodiversity, but will reduce the number of VPI's handled by the mobile network interface unit, thereby increasing the number of base stations that can be supported by a single mobile network interface unit.

To meet the requirements of particular radio systems the splitter/combiner function can be replaced by a splitter or a combiner.

Where the radio system is such that no information additional to that received over the air interface is transmitted from the base station towards the access network, the additional information processing function and messages relating to the control of such a function can be removed.

The application of the above principles to handover between base stations controlled by different mobile network interface units is indicated by means of the following example shown in Figure 11. Initially the mobile is assumed to be affiliated to the base station A. It then moves progressively to being affiliated to base stations A and B, base station B alone, base stations B and C and finally base station C alone.

Figure 12 shows how the base station, sub-network interface units and mobile network interface units interact to assign the splitters/combiners and perform additional information processing. It should be noted that the controlling mobile network interface unit is now indicated as a parameter in the request affiliation message from the mobile terminal. The sub-network interface units and mobile network interface units have to decide what action to take on the basis of the combined VCI and mobile network interface unit values.

Figure 13 shows the modified algorithm performed at the mobile network interface unit.

Implementation of a system as herein described is beneficial in that it allows transmissions from a mobile terminal over macrodiverse paths to be readily identified as belonging to the same connection and routed to a common point in the network using standard ATM routing techniques without the need to perform network switching each time a mobile terminal changes the base station to which it is affiliated.

Additionally, an automatic method is provided for moving the point at which the combining and splitting of diverse paths is performed to the optimal point as the mobile terminal changes the base station to which it is affiliated. This is achieved by low level protocols and does not require network switching.

## Claims

1. An asynchronous transfer mode (ATM) communication network comprising at least one mobile terminal arranged to be in radio communication with a plurality of base stations, said base stations being connected to an access network by way of sub-network and a sub-network interference unit, said access network being connected to a mobile network interface unit, characterised in that each sub-network interface unit and each mobile network interface unit includes splitting/combining means arranged to operate so that a mobile terminal can be affiliated to one or more base stations at any one time.

2. An ATM communication network as claimed in Claim 1, wherein a particular route across the network is identified by a virtual path identifier which identifies a particular base station or a particular sub-network interface unit, or a particular mobile network interface unit.

3. An ATM network as claimed in Claim 2, wherein if the sub-network interface unit is performing the splitting/combining function, the paths are identified by the values VPI_{A} and VPI_{B}, and if the mobile network interface unit is performing a splitting/combining function the paths are identified as VPI_{M} and VPI_{C}, and if a path includes a sub-network interface unit, it will pass the data transparently changing the value of the VPI_{M} value to VPI_{A} and VPI_{B}.

4. An ATM network as claimed in Claim 3, wherein upon receipt of an affiliation request message the sub-network interface unit decides whether it is aware of a connection using a quoted virtual channel identifier (VCI), and if so assigns a splitter/combiner to the connection, if not, it passes the message on having changed the VPI value to show the mobile network interface unit that it is the next point on the connection to the mobile terminal.

5. An ATM network as claimed in Claim 3, wherein upon receipt of a deaffiliation request message the sub-network interference unit decides whether it has assigned a splitter/combiner to the connection with the quoted virtual channel identifier (VCI), and if so de-assigns the splitter/combiner, if not, it passes the message on having changed the VPI value to show the mobile network interface unit that it is the next point on the connection to the mobile terminal.

6. An ATM network as claimed in any preceding claim, wherein the method of assigning splitter/combiners to a connection comprise the steps of:
affiliate the mobile terminal to the base station A only, the mobile terminal requests affiliation to the base station B quoting the VCI for the connection, and allocating a splitter/combiner at the sub-network interface unit,
the mobile terminal deaffiliates from the base station A, and the connection reverts to the state it was originally, but connected to base station B,
the mobile terminal requests affiliation to the base station C,
if base station C is on a different sub-network the sub-network is ignorant of the VCI value, and the message is passed to the mobile network interface unit,
the mobile terminal deaffiliates from the base station B.

7. An ATM network as claimed in Claim 6, wherein if a splitter/combiner at a sub-network interface unit is required, and not available, the connection is routed to the mobile network interface unit where the splitting/combining function is carried out.
